# DEMANDE DE BREVET EUROPEEN

(11) **EP 1 690 731 A1**
(43) Date de publication de la demande: **16.08.2006**
(21) Numéro de dépôt: 05300846.2
(22) Date de dépôt: 21.10.2005
(51) Int. Cl.: B60N 2/06

(54) **Siège de véhicule automobile présentant une liaison au sol d'encombrement réduit**

(30) Priorité: 27.10.2004 FR 0411444
(71) Demandeur: Renault s.a.s., 92100 Boulogne Billancourt (FR)
(72) Inventeur: Monteil, Michel, 78870 Bailly (FR); Larsonneur, Jean-François, 78100 Saint Germain en Laye (FR); Mercier, Cédric, 91830 Le Coudray-Montceaux (FR)

(57) **Abrégé**

L'invention concerne un siège pour véhicule automobile comportant un support d'assise (1) et deux glissières (3, 4) reliées au support d'assise aptes à permettre le déplacement du siège par rapport à la direction longitudinale (X) du véhicule, caractérisé en ce qu'une première glissière (3) destinée à être fixée au plancher du véhicule est située sous le support d'assise (1), la deuxième glissière (4) étant située à proximité d'un bord latéral longitudinal (6) du support d'assise dans un plan situé au dessus du plan contenant la première glissière.

## Description

L'invention concerne un siège de véhicule automobile présentant une liaison au sol d'encombrement réduit.

Les sièges automobiles actuels sont généralement pourvus de deux glissières, fixées sur le plancher suivant la direction longitudinale du véhicule et permettant de faire coulisser le siège d'avant en arrière en fonction des souhaits de l'utilisateur.

Ces deux glissières présentent toutefois l'inconvénient de restreindre la place disponible sous le siège, de sorte qu'un passager assis derrière le siège ne dispose que de peu de place pour glisser ses pieds sous le siège.

Il existe donc un besoin de réaliser un siège dont la liaison au sol permette d'augmenter la place sous le siège pour le passage des pieds d'un passager assis à une place arrière, tout en maintenant la possibilité de régler la position du siège suivant la direction longitudinale du véhicule.

A cet effet, l'objet de l'invention concerne un siège pour véhicule automobile comportant un support d'assise et deux glissières reliées au support d'assise aptes à permettre le déplacement du siège par rapport à la direction longitudinale du véhicule, caractérisé en ce qu'une première glissière destinée à être fixée au plancher du véhicule est située sous le support d'assise, la deuxième glissière étant située à proximité d'un bord latéral longitudinal du support d'assise dans un plan situé au dessus du plan contenant la première glissière.

Seule une glissière reste ainsi placée sous le siège, fixée au plancher, ce qui permet d'augmenter la place disponible pour le passage des pieds d'un passager. L'autre glissière n'est pas située sous le support d'assise mais à côté de celui-ci.

Avantageusement, la première glissière est située sensiblement au milieu du support d'assise suivant la direction transversale, ou à proximité du milieu. Le passager assis derrière le siège dispose alors de sensiblement autant de place pour chaque pied sous le support d'assise, de part et d'autre de la première glissière.

Avantageusement, la première glissière est reliée au support d'assise au moyen d'une embase présentant, suivant la direction transversale, une base étroite et une partie supérieure de plus grande dimension. Cette forme permet de réduire l'encombrement de l'embase sous le siège et de conserver un espace disponible important pour les pieds d'un passager arrière.

De préférence, l'embase présente une section transversale sensiblement en forme de Y.

Avantageusement, l'extrémité latérale de l'embase la plus éloignée de la deuxième glissière est reliée au support d'assise au moyen d'une paire de bielles dont les axes sont confondus avec les axes d'une autre paire de bielles correspondantes reliant la deuxième glissière au bord latéral adjacent du support d'assise, les bielles étant aptes à permettre le réglage de la hauteur du support d'assise.

De préférence, les axes inférieurs et/ou supérieurs des paires de bielles correspondantes sont reliés entre eux, pour une coordination du mouvement des bielles.

Avantageusement, en variante, l'autre extrémité latérale de l'embase est pourvue d'une paire de bielles supplémentaire reliant l'embase au support d'assise et dont les axes sont confondus avec ceux des autres paires de bielles. Cette paire de bielles supplémentaire permet une reprise des efforts subis par le support d'assise.

De préférence, les axes inférieurs et/ou supérieurs des paires de bielles de l'embase sont reliés entre eux.

L'invention concerne également un véhicule automobile pourvu d'au moins un siège selon l'invention, caractérisé en ce que la glissière latérale surélevée du siège est supportée par une console centrale ou une paroi latérale du véhicule.

Avantageusement, le siège est un siège avant ou un siège d'une rangée intermédiaire.

L'invention est maintenant décrite en référence aux dessins annexés, non limitatifs, dans lesquels :
- la figure 1 est une représentation en perspective du support d'assise d'un siège selon l'invention ;

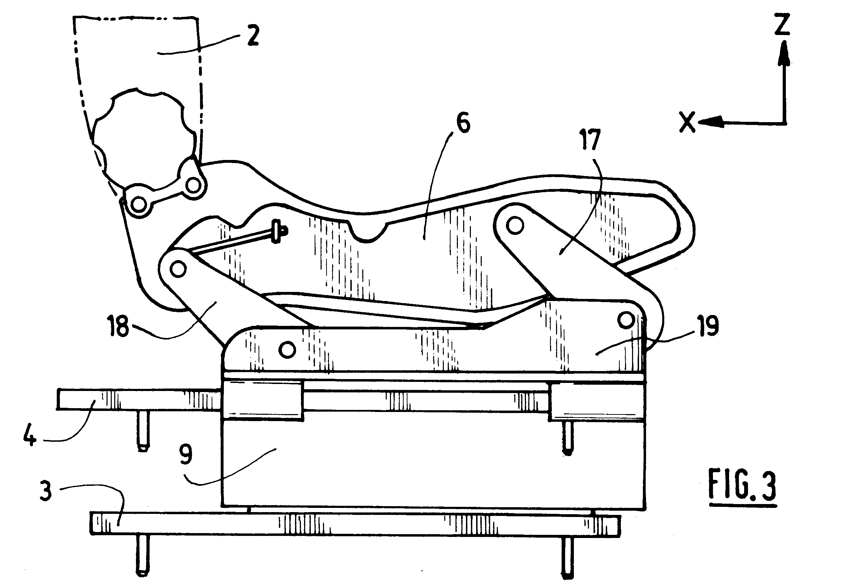

- les figures 2 et 3 sont des vues de dessus et de côté respectivement, du support d'assise représenté figure 1.

Sur les figures, on a représenté les directions longitudinale X, transversale Y, et verticale Z d'un véhicule automobile, la direction X étant dirigée vers l'arrière du véhicule. Le siège représenté est décrit par rapport à une orientation face à la route dans le véhicule.

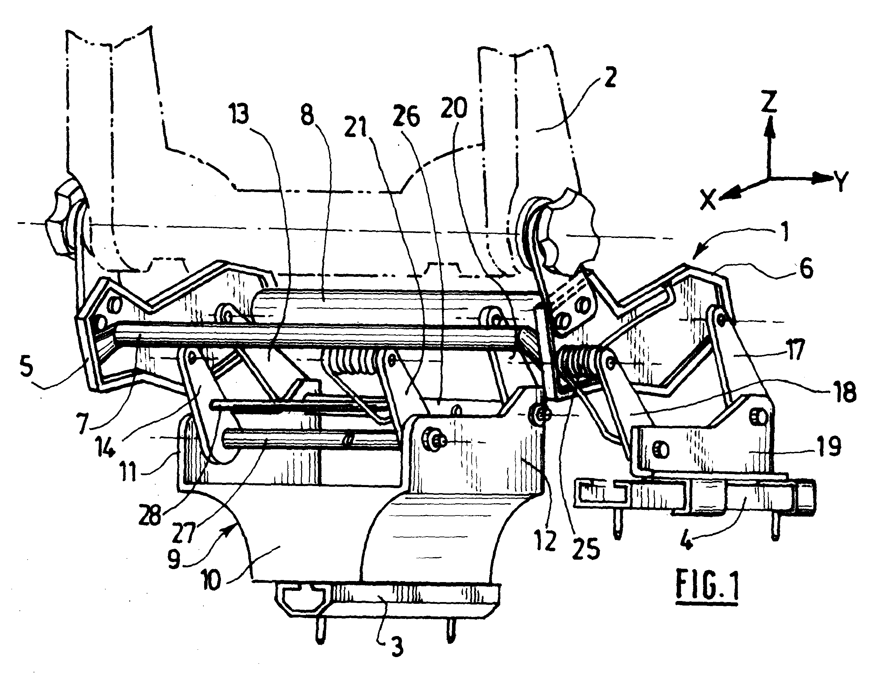

Sur la figure 1 est représenté le support d'assise 1 d'un siège selon l'invention, et une partie de la structure de dossier 2 de ce siège.

Le siège représenté dans l'exemple est destiné à être utilisé comme siège d'un conducteur dans un véhicule automobile.

Le support d'assise 1 est relié à deux glissières 3 et 4 supportées par le véhicule, de manière à permettre le déplacement du siège suivant la direction longitudinale X du véhicule.

Une première glissière 3 est située sous le support d'assise et assure la liaison entre le support d'assise et le plancher du véhicule (non représenté). La deuxième glissière 4, n'est pas située sous le support d'assise, mais à proximité d'un bord latéral du support d'assise 1, dans un plan situé au dessus de celui contenant la première glissière 3. Dans l'exemple, ce plan est situé entre le plancher et le support d'assise 1.

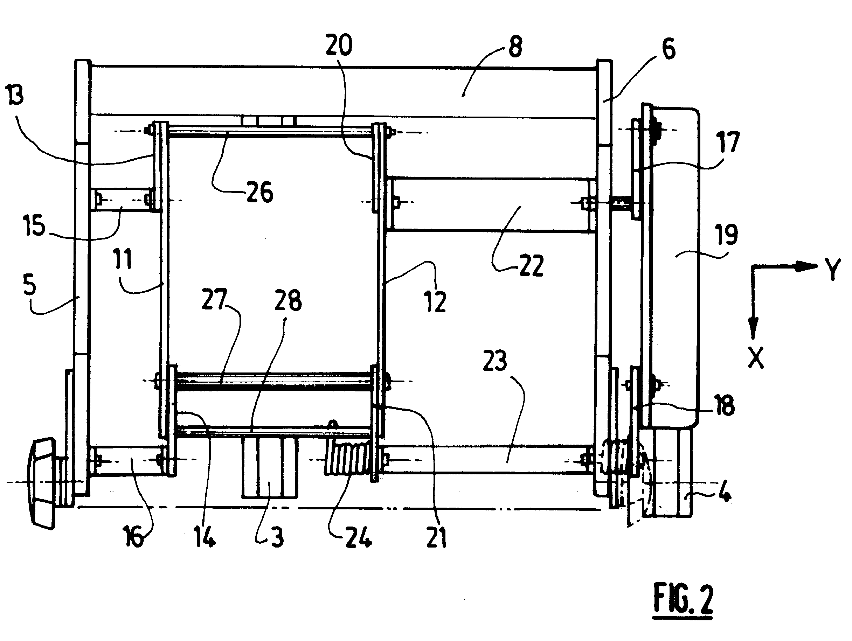

Le support d'assise 1 est formé de manière connue d'un cadre rigide destiné à recevoir une garniture pour former l'assise. Ce cadre rigide comporte notamment deux flasques latéraux 5, 6 s'étendant suivant la direction longitudinale du siège, par exemple reliés par des barres transversales arrière 7 et avant 8 (la barre arrière 7 n'est pas représentée figure 2 pour plus de clarté).

Le support d'assise 1 est relié à la première glissière au moyen d'une embase 9 dont la section transversale présente sensiblement une forme de Y. La partie inférieure 10 de cette embase est montée coulissante dans la glissière 3. Cette partie inférieure présente de préférence une faible largeur suivant la direction transversale Y afin de limiter son encombrement. La hauteur de cette partie 10 est de préférence suffisante pour permettre à un passager assis derrière de placer confortablement ses pieds sous le siège de part et d'autre de l'embase 9. La partie supérieure de l'embase est formée de deux ailes 11 et 12 sensiblement parallèles et s'étendant dans des plans sensiblement verticaux, suivant la direction longitudinale du siège. Ces ailes 11 et 12 sont situées de part et d'autre de la partie inférieure 10, de sorte que la largeur de la partie supérieure de l'embase est plus grande que la largeur de sa partie inférieure. Cette configuration permet une meilleure répartition de la charge du support d'assise sur l'embase.

L'un des flasques latéraux, dans l'exemple, le flasque latéral gauche 5 du siège, est relié à l'aile gauche 11 de l'embase au moyen de deux bielles avant 13 et arrière 14. A cet effet, des pièces de liaison 15 et 16 sont prévues respectivement entre l'axe supérieur de chaque bielle et le flasque. Ces pièces 15, 16 sont représentées uniquement sur la figure 2, et présentent par exemple une section transversale en U ou Z, sensiblement en forme de cornière.

L'autre flasque latéral 6 est relié à la deuxième glissière 4 surélevée au moyen de deux bielles avant 17 et arrière 18 dont les extrémités inférieures sont supportées par un coulisseau 19 monté coulissant dans la glissière 4. Ce coulisseau présente à cet effet une section transversale en forme de L dont le montant est relié aux bielles 17, 18 et la base est reliée à la glissière 4.

Les axes des bielles avant 13 et 17 sont confondus, de même que les axes des bielles arrière 14 et 18, de sorte que les bielles forment un système de réglage de la hauteur du support d'assise.

Dans l'exemple, une paire supplémentaire de bielles avant 20 et arrière 21 est utilisée afin de permettre une reprise des efforts. Ces bielles sont reliées d'une part à l'aile droite 12 de l'embase et d'autre part au support d'assise 1. Elles sont ainsi situées entre les deux autres paires de bielles suivant la direction transversale du siège. Dans l'exemple, elles sont reliées au support d'assise 1 par leur axe supérieur au moyen de pièces de liaison 22 et 23 solidaires du flasque latéral droit 6, similaires aux pièces de liaison 15 et 16 déjà décrites (figure 2).

Les axes des ces bielles avant 20 et arrière 21 sont également confondus respectivement avec les axes des autres bielles avant 13, 17 et arrière 14, 18.

Des ressorts 24, 25 montés respectivement sur la bielle arrière 21 et la bielle arrière 18, permettent de faciliter le pivotement des bielles et ainsi le réglage en hauteur du support d'assise.

Dans l'exemple, les axes inférieurs des bielles reliées aux ailes 11, 12 de l'embase sont reliés entre eux par des tiges transversales 26, 27. Ainsi, la tige 26 relie les axes inférieurs des bielles avant 13 et 20, et la tige 27 relie les axes inférieurs des bielles arrière 14 et 21. Une entretoise supplémentaire 28 reliant les bielles arrière 14, 21, à proximité de leur milieu, est également prévue pour rigidifier l'ensemble.

Dans l'exemple représenté, tel que visible sur la figure 2, la première glissière 3 est légèrement décalée par rapport au milieu du support d'assise suivant la direction transversale Y. L'aile gauche 11 est alors située à proximité du flasque gauche 5 du siège, tandis que l'aile droite 12 est située à proximité du milieu du support d'assise, et la deuxième glissière 4 est proche de l'autre flasque du siège à faible distance de ce dernier en s'éloignant de l'assise. Cette configuration permet d'obtenir une bonne répartition de la charge du support d'assise entre la deuxième glissière 4 et l'embase 9.

Bien entendu, la première glissière peut être disposée de manière plus centrale par rapport au support d'assise, et la forme de l'embase, notamment la forme de sa partie supérieure, peut être modifiée en conséquence. La paire supplémentaire de bielles 20, 21 peut également être supprimée. Il est alors préférable de relier entre elles les autres paires de bielles afin d'améliorer la robustesse de l'ensemble des bielles.

Dans l'exemple, les pièces de liaison 15 et 16 sont distinctes, on peut toutefois réunir ces deux pièces en une seule. Il en est de même pour les pièces de liaison 22 et 23.

Dans l'exemple, l'embase est symétrique par rapport à un axe longitudinal, les ailes 11 et 12 étant notamment formées par des plaques sensiblement parallèles. Bien entendu, la forme de ces ailes peut varier, et l'embase ne plus présenter de symétrie axiale, pourvu que les axes des bielles restent alignés avec ceux des autres bielles. Par exemple, l'aile gauche 11 peut présenter une forme en S, de sorte que la partie avant de l'aile soit quasiment contre le flasque gauche 5, permettant ainsi une fixation directe de l'axe supérieur de la bielle avant sur le flasque 5.

Bien entendu, les deux glissières 3, 4, ou bien le cas échéant, l'embase 9 et la deuxième glissière 4, peuvent être reliées au support d'assise directement ou par l'intermédiaire d'un quelconque système de réglage de la hauteur du support d'assise.

Les glissières utilisées peuvent être de tout type, et on peut notamment prévoir des glissières permettant l'enlèvement du siège.

Le siège décrit peut être utilisé à tout emplacement du véhicule, de préférence à une place avant ou sur une rangée intermédiaire. La glissière surélevée peut alors être fixée soit à une console centrale s'étendant suivant la direction longitudinale du véhicule, ou encore à une paroi latérale du véhicule.

## Revendications

1. Siège pour véhicule automobile comportant un support d'assise (1) et deux glissières (3, 4) reliées au support d'assise aptes à permettre le déplacement du siège par rapport à la direction longitudinale (X) du véhicule, **caractérisé en ce qu'**une première glissière (3) destinée à être fixée au plancher du véhicule est située sous le support d'assise (1), la deuxième glissière (4) étant située à proximité d'un bord latéral longitudinal (6) du support d'assise dans un plan situé au dessus du plan contenant la première glissière.

2. Siège selon la revendication 1, **caractérisé en ce que** la première glissière (3) est située sensiblement au milieu du support d'assise (1) suivant la direction transversale (Y), ou à proximité du milieu.

3. Siège selon la revendication 1 ou 2, **caractérisé en ce que** la première glissière (3) est reliée au support d'assise au moyen d'une embase (9) présentant suivant la direction transversale une base étroite (10) et une partie supérieure de plus grande dimension.

4. Siège selon la revendication 3, **caractérisé en ce que** l'embase présente une section transversale sensiblement en forme de Y.

5. Siège selon la revendication 3 ou 4, **caractérisé en ce que** l'extrémité latérale (11) de l'embase la plus éloignée de la deuxième glissière (4) est reliée au support d'assise au moyen d'une paire de bielles (13, 14) dont les axes sont confondus avec les axes d'une autre paire de bielles (17, 18) correspondante reliant la deuxième glissière (4) au bord latéral adjacent (6) du support d'assise, les bielles (13, 14, 17, 18) étant aptes à permettre un réglage de la hauteur du support d'assise.

6. Siège selon la revendication 5, **caractérisé en ce que** les axes inférieurs et/ou supérieurs des paires de bielles correspondantes sont reliés entre eux.

7. Siège selon la revendication 5, **caractérisé en ce que** l'autre extrémité latérale (12) de l'embase est pourvue d'une paire de bielles (20, 21) supplémentaire reliant l'embase au support d'assise (1) et dont les axes sont confondus avec ceux des autres paires de bielles.

8. Siège selon la revendication 7, **caractérisé en ce que** les axes inférieurs et/ou supérieurs des paires de bielles de l'embase sont reliés entre eux.

9. Véhicule automobile pourvu d'au moins un siège selon l'une des revendications précédentes, **caractérisé en ce que** la glissière latérale surélevée (4) du siège est supportée par une console centrale ou une paroi latérale du véhicule.

10. Véhicule automobile selon la revendication 9, **caractérisé en ce que** le siège est un siège avant ou un siège d'une rangée intermédiaire.
